# EUROPÄISCHE PATENTSCHRIFT

(11) **EP 2 839 951 B1**
(45) Veröffentlichungstag und Bekanntmachung des Hinweises auf die Patenterteilung: **21.11.2018**
(21) Anmeldenummer: 14181781.7
(22) Anmeldetag: 21.08.2014
(51) Int. Cl.: B31D 5/00

(54) **Verfahren zur Herstellung einer mindestens einseitig kaschierten Wellpappebahn**
Method for producing a web of corrugated cardboard that is laminated on at least one side
Procédé de fabrication d'une bande de carton ondulé contrecollé au moins sur une face

(30) Priorität: 23.08.2013 DE 102013216828
(43) Veröffentlichungstag der Anmeldung: 25.02.2015
(73) Patentinhaber: BHS Corrugated Maschinen- und Anlagenbau GmbH, 92729 Weiherhammer (DE)
(72) Erfinder: Fischer, Markus, 92708 Mantel (DE); Müller, Florian, 92729 Weiherhammer (DE)
(74) Vertreter: Rau, Schneck & Hübner Patentanwälte Rechtsanwälte PartGmbB

(56) Entgegenhaltungen:
- DE-A1- 10 034 780
- DE-A1- 19 715 174
- GB-A- 2 058 663
- US-A1- 2005 194 103

## Beschreibung

Die Erfindung richtet sich auf ein Verfahren zur Herstellung einer mindestens einseitig kaschierten, endlosen Wellpappebahn.

Gattungsgemäße Vorrichtungen bzw. Verfahren sind durch offenkundige Vorbenutzung hinreichend bekannt. Es ist üblich, den Leimauftrag auf eine Wellbahn über einen zwischen einer Leimauftrags-Walze und einer dieser zugeordneten Riffelwalze manuell einzustellen. Die Anpresskraft der Leimauftrags-Walze an diese Riffelwalze wird außerdem im Allgemeinen eingestellt. Nachteilig hierbei ist, dass die Leimauftrags-Walze beschädigt bzw. zerstört werden kann, wenn keine Wellbahn vorhanden ist und die Leimauftrags-Walze so direkt gegen die Riffelwalze ohne Zwischenschaltung der Wellbahn gedrückt wird.

Aus der DE 100 34 780 A1 ist eine Maschine zur Herstellung einer Wellpappebahn bekannt. Zur Einstellung der Breite eines Beleimungsspalts dient eine Kalibrierungseinrichtung, die eine Andrückeinheit mit einer verschiebbaren Kolbenstange umfasst. Die Kolbenstange drückt gegen ein verschiebbares Lagergehäuse der Leimauftragswalze. Eine Riffelwalze weist Lagerzapfen auf, die jeweils in einem ein Lagergehäuse aufweisenden Lager angeordnet sind. Zwischen den Lagergehäusen der Leimauftragswalze und der Riffelwalze sind eine Kraftmesseinheit und eine Stelleinheit zur Einstellung des Lagerabstands zwischen diesen Lagergehäusen vorgesehen. An einem Ende des Lagergehäuses der Leimauftragswalze ist ein Wirbelstromsensor zur Messung dessen Abstand zur Riffelwalze angeordnet. Zur Kalibrierung drückt die Andrückeinheit das Lagergehäuse der Leimauftragswalze gegen das Lagergehäuse der Riffelwalze. Anschließend wird der Lagerabstand reduziert. Nach einer Kalibrierung des Beleimungsspalts wird die Leimauftragswalze wieder geringfügig von der Riffelwalze abgehoben. Während des Betriebs werden Änderungen der Spaltbreite durch den Wirbelstromsensor gemessen und über eine Steuereinheit und die Stelleinheit automatisch ausgeglichen.

Die US 2005/0194103 A1 offenbart eine Leimauftragsvorrichtung mit einer Einrichtung zum Regeln der Position und Ausrichten einer Bahn in Bezug auf eine Leimauftragswalze. Eine Umlenkwalze wird von Tragrahmen gehalten. Eine Bahn-Positionierungswalze wird von Tragarmen getragen. Eine Druck- oder Spalt-Mess-Regeleinrichtung ist mit einem zweiten Tragarm verbunden. Die Regeleinrichtung ist im Stande, die Weite eines Beleimungsspalts und/oder den durch die Positionierungswalze auf die Riffelungen aufgebrachten Druck gegen die Leimauftragswalze zu messen.

Die DE 197 15 174 A1 offenbart eine Maschine zur Herstellung von Wellpappe. Eine Wellbahn wird in einer Beleimungsstation beleimt, die ein verfahrbares Beleimungsaggregat mit einer Beleimungswalze umfasst. Zur Einstellung der Maschine wird, nachdem ein Schlitten an einem Maschinengestell der Maschine verriegelt ist, eine Arbeitskammer eines Kolben-Zylinder-Aggregats mit Druck beaufschlagt, sodass ein Wagen des Beleimungsaggregats in Richtung zu einer Riffelwalze bewegt wird. Die Arbeitskammer wird so stark beaufschlagt, dass sich die gewünschte Andrückkraft zwischen der Beleimungswalze und der Riffelwalze einstellt. Zur Messung der Andrückkraft dient eine Kraftmessdose. Das Messsignal wird zu einer Steuereinheit übertragen, wo es ausgewertet wird und gegebenenfalls ein Stellsignal erzeugt wird.

Aus der GB 2 058 663 A ist eine Vorrichtung zum Herstellen einseitig kaschierter Wellpappe bekannt. Ein Spalt zwischen einer unteren Riffelwalze und einer Leimauftragswalze ist automatisch in Abhängigkeit der Dicke einer Bahn regelbar. Die Vorrichtung umfasst ein Detektormittel zum Detektieren des Spalts zwischen den Walzen und ein Detektormittel zum Detektieren der Dicke des Mediums.

Der Erfindung liegt daher die Aufgabe zugrunde, ein Verfahren zur Herstellung einer mindestens einseitig kaschierten, endlosen Wellpappebahn bereitzustellen, dessen Leimauftrags-Walze automatisiert verstellbar bzw. verlagerbar ist.

Diese Aufgabe wird erfindungsgemäß durch die in dem unabhängigen Anspruch 1 angegebenen Merkmale gelöst. Der Kern der Erfindung liegt darin, dass die Regelungs-Einrichtung eine Spalt-Regel-Einheit zum Regeln einer Spalt-Weite des Spalts zwischen der ersten Riffelwalze und der Leimauftrags-Walze und eine Anpresskraft-Regel-Einheit zum Regeln einer Anpresskraft der Leimauftrags-Walze gegen die erste Riffelwalze umfasst. Durch die Regelung der Spalt-Weite des Spalts zwischen der ersten Riffelwalze und der Leimauftrags-Walze ist die Leimauftrags-Menge auf die Spitzen der Wellung einstellbar. Durch das Regeln der Anpresskraft der Leimauftrags-Walze gegen die erste Riffelwalze ist unter anderem auch die Leimauftrags-Menge auf die Spitzen der Wellung einstellbar.

Die Spalt-Regel-Einheit ist vorzugsweise eine elektrische, bevorzugter eine elektronische, Spalt-Regel-Einheit. Die Anpresskraft-Regel-Einheit ist günstigerweise eine elektrische, bevorzugter eine elektronische, Anpresskraft-Regel-Einheit. Es ist von Vorteil, wenn die Veränderung der Spalt-Weite des Spalts zwischen der ersten Riffelwalze und der Leimauftrags-Walze in Stufen von 0,01 mm erfolgt.

Die Verlagerungs-Einrichtung wird entsprechend der Regel-Signale der Spalt-Regel-Einheit und/oder der Anpresskraft-Regel-Einheit betätigt, was zu einer entsprechenden Bewegung der Leimauftrags-Walze relativ zu der ersten Riffelwalze führt. Die Leimauftrags-Walze ist von der ersten Riffelwalze entfernbar, was zu einer Zunahme des Spalts zwischen diesen führt. Die Leimauftrags-Walze ist zu der ersten Riffelwalze hin bewegbar, was zu einer Abnahme des Spalts zwischen diesen führt. Die Leimauftrags-Walze ist an die erste Riffelwalze bzw. an die zu beleimende Wellbahn anpressbar, was zu einer Erhöhung der Anpresskraft zwischen diesen führt. Bei Entfernung der Leimauftrags-Walze nimmt die Anpresskraft zwischen diesen wieder ab.

Die Leimauftrags-Walze ist vorzugsweise drehangetrieben.

Die erste Riffelwalze und die zweite Riffelwalze sind vorzugsweise paarweise in einem Maschinengestell angeordnet und dort drehbar bzw. drehantreibbar gelagert. Zwischen den Riffelwalzen ist eine Materialbahn hindurchgeführt, die durch die Riffelwalzen geriffelt bzw. gewellt wird.

Die Verlagerungs-Einrichtung arbeitet beispielsweise pneumatisch oder hydraulisch. Alternativ umfasst diese einen Motor, insbesondere einen Elektromotor, der vorteilhafterweise einen Linearantrieb bildet. Eine Hebel-Anordnung kann außerdem vorhanden sein.

Die Andrück-Einrichtung zum Andrücken einer Kaschierbahn an die Wellbahn umfasst beispielsweise mindestens eine Andrück-Walze oder ein um mindestens zwei Umlenk-Walzen umlaufendes Andrück-Band.

Die Signal-Verbindung zwischen der Regelungs-Einrichtung und der Verlagerungs-Einrichtung ist drahtgebunden oder drahtlos ausgeführt. Über die Signal-Verbindung sind der Verlagerungs-Einrichtung Regel-Signale zuführbar. Die Regel-Signale sind vorzugsweise elektrische Regel-Signale.

Weitere vorteilhafte Ausgestaltungen der Erfindung sind in den Unteransprüchen angegeben.

Die mindestens eine Kolben-Zylinder-Einheit gemäß dem Unteranspruch 2 ist somit vorzugsweise teleskopierbar ausgeführt. Ein Verändern der Länge der mindestens einen Kolben-Zylinder-Einheit führt zu einer Verlagerung der Leimauftrags-Walze gegenüber der ersten Riffelwalze.

Es ist von Vorteil, wenn bei der mindestens einen Kolben-Zylinder-Einheit gemäß dem Unteranspruch 3 eine Strömungs-Verbindungsleitung zwischen den Teil-Arbeitsräumen vorhanden ist. Günstigerweise ist in diese ein Ventil eingesetzt.

Es ist zweckmäßig, wenn die mindestens eine Kolben-Zylinder-Einheit ein Gehäuse umfasst, das den ersten Teil-Arbeitsraum und den zweiten Teil-Arbeitsraum räumlich begrenzt. Die Kolbenstange ist aus dem Gehäuse geführt und hat an ihrem freien Ende günstigerweise ein Befestigungsmittel. Ferner ist vorzugsweise an dem Gehäuse der Kolben-Zylinder-Einheit ein weiteres Befestigungsmittel angeordnet. Die mindestens eine Kolben-Zylinder-Einheit ist über die Befestigungsmittel direkt oder indirekt an dem Maschinengestell der Vorrichtung und an der verlagerbaren Leimauftrags-Einrichtung angeordnet. Diese wirkt zwischen der Leimauftrags-Walze und der ersten Riffelwalze.

Gemäß dem Unteranspruch 4 ist eine erste Druckmess-Einheit zum Messen des Drucks in dem ersten Teil-Arbeitsraum vorhanden. Es ist von Vorteil, wenn die erste Druckmess-Einheit Bestandteil einer ersten Druckaufnahme-Einheit ist. Günstigerweise sind die ersten Druck-Signale elektrische Druck-Signale. Die ersten Druck-Signale werden der Regelungs-Einrichtung zugeführt.

Gemäß dem Unteranspruch 5 ist eine zweite Druckmess-Einheit zum Messen des Drucks in dem zweiten Teil-Arbeitsraum vorhanden. Es ist zweckmäßig, wenn die zweite Druckmess-Einheit Bestandteil einer zweiten Druckaufnahme-Einheit ist. Günstigerweise sind die zweiten Druck-Signale elektrische Druck-Signale. Die zweiten Druck-Signale werden der Regelungs-Einrichtung zugeführt.

Die Ausgestaltung gemäß dem Unteranspruch 6 erlaubt eine besonders einfache und funktionssichere Einstellung eines Spalt-Weiten-Nullpunkts des Spalts zwischen der ersten Riffelwalze und der Leimauftrags-Walze. Durch die Detektion des Spalt-Weiten-Nullpunkts ist die Spalt-Weite zwischen der Leimauftrags-Walze und der ersten Riffelwalze äußerst genau und funktionssicher einstellbar. Der Spalt-Weiten-Nullpunkt des Spalts zwischen der ersten Riffelwalze und der Leimauftrags-Walze ist so durch eine tatsächliche Reaktions-Kraft zwischen der ersten Riffelwalze und der Leimauftrags-Walze einstellbar. Mechanische (Gegen-)anschläge an der Leimauftrags-Einrichtung sind so nicht erforderlich.

Analoges gilt zu dem Unteranspruch 7.

Das Weg-Mess-System gemäß dem Unteranspruch 8 arbeitet vorzugsweise magnetostriktiv bzw. nach dem Prinzip der Magnetostriktion. Es umfasst dann vorzugsweise ein längliches Messelement, vorzugsweise einen Messdraht, ein Messrohr oder einen Messstab, und mindestens einen Positionsmagnet, insbesondere mindestens einen Permanent-Positionsmagnet, die zueinander beweglich sind. Es hat außerdem einen Wandler, der eine mechanische Schwingung in ein elektrisches Signal wandelt. Das längliche Messelement fungiert als Wellenleiter und ist aus einem magnetostriktiven Material, wie Nickel, Eisen und/oder Kobalt, gebildet.

In das längliche Messelement ist ein Stromimpuls einführbar bzw. einleitbar, was einen Messvorgang auslöst und ein zirkulares Magnetfeld erzeugt. Im Bereich des mindestens einen Positionsmagnets überlagern sich dann die Magnetfelder, was eine mechanische Welle in dem länglichen Messelement zur Folge hat. Die zu einem Ende des länglichen Messelements laufende mechanische Welle wird vorzugsweise gedämpft, während die zu dem Wandler laufende Welle durch Umkehrung des magnetostriktiven Effekts ein elektrisches Signal erzeugt. Dadurch, dass die Geschwindigkeit der mechanischen Welle in dem länglichen Messelement bekannt ist und die Zeit zwischen dem Senden des Stromimpulses und dem Empfangen des magnetostriktiven Echos gemessen wird, lässt sich der zurückgelegte relative Weg zwischen dem länglichen Messelement und dem mindestens einen Positionsmagnet durch die Formel Weg = Geschwindigkeit x Zeit berechnen.

Der mindestens eine Positionsmagnet ist an dem Maschinengestell oder an der Leimauftrags-Einrichtung angeordnet, während an dem Teil, an dem der mindestens eine Positionsmagnet nicht angeordnet ist, das längliche Messelement angebracht ist.

Potentiometrische, induktive, magnetoresistive oder optische Weg-Mess-Systeme sind alternativ einsetzbar.

Wenn die Verlagerungs-Einrichtung einen Fluid-Zylinder, wie einen Hydraulik- oder Pneumatik-Zylinder umfasst, ist der mindestens eine Positionsmagnet des Weg-Mess-Systems vorzugsweise in/an einem in dem Fluid-Zylinder verschiebbar geführten Kolben befestigt, während das längliche Messelement vorzugsweise an dem Boden des Fluid-Zylinders, beispielsweise durch Einschrauben, befestigt ist und in die mit dem Kolben verbundene Kolbenstange ragt. Die Kolbenstange ist dazu günstigerweise hohl ausgeführt oder hat eine entsprechende Aufnahme-Bohrung.

Das Weg-Mess-System ist zwischen der ersten Riffelwalze und der Leimauftrags-Walze wirksam bzw. angeordnet. Weg-Mess-Signale, die repräsentativ für die Spalt-Weite zwischen der Leimauftrags-Walze und der ersten Riffelwalze sind, werden vorzugsweise der Regelungs-Einrichtung zugeführt. Diese Signale sind vorzugsweise elektrische Signale.

Gemäß dem Unteranspruch 9 ist beim Regeln der Spalt-Weite des Spalts zwischen der ersten Riffelwalze und der Leimauftrags-Walze die Leimauftrags-Walze gegenüber einem Maschinengestell der Vorrichtung durch mindestens eine Verspann-Einheit verspannt, was im Wesentlichen eine Spielfreiheit der Gelenke bzw. Lager der Verlagerungs-Einrichtung bzw. einer Führungs-Einrichtung zum Führen der Leimauftrags-Walze erlaubt. Die Verspann-Kolben-Zylinder-Einheit arbeitet vorzugsweise hydraulisch, pneumatisch, elektrisch oder mechanisch, beispielsweise durch Federkraft.

Die Ausgestaltung gemäß dem Unteranspruch 10 ermöglicht wieder eine äußerst einfache und funktionssichere Detektion des Anpresskraft-Nullpunkts der Anpresskraft der Leimauftrags-Walze gegen die erste Riffelwalze, der wiederum zu einer besonders genauen Regelung führt. Es ist von Vorteil, wenn die Regelungs-Einrichtung dafür eine Druck-Veränderung in dem ersten und/oder zweiten Teil-Arbeitsraum detektiert.

Es ist von Vorteil, wenn die Leimauftrags-Einrichtung ferner eine Leim-Wanne zur Aufnahme von auf die Spitzen der Wellung der Wellbahn aufzutragenden Leim umfasst, wobei die Leimauftrags-Walze in der Leim-Wanne drehbar gelagert ist. Es ist von Vorteil, wenn die Leimauftrags-Einrichtung ferner eine Leimdosier-Walze aufweist, die mit der Leimauftrags-Walze zum Ausbilden einer gleichmäßigen Leim-Schicht auf der Leimauftrags-Walze einen einstellbaren Spalt bildet.

Günstigerweise ist die Leim-Wanne mit der in dieser angeordneten Leimauftrags-Walze gegenüber der ersten Riffelwalze verlagerbar. Diese Ausgestaltung erlaubt eine besonders einfache und funktionssichere Verlagerung der Leimauftrags-Walze. Es ist von Vorteil, wenn die Leim-Wanne verschiebbar geführt ist. Vorteilhafterweise sind dafür Laufrollen an der Leim-Wanne und/oder an dem Maschinengestell der Vorrichtung vorgesehen.

Günstigerweise erfolgt beim Regeln der Anpresskraft keine Verspannung der Leimauftrags-Einrichtung gegenüber dem Maschinengestell der Vorrichtung.

Vorzugsweise ist die Leimauftrags-Einrichtung in einem Schutz-Gehäuse untergebracht, wenn diese unter Überdruck arbeitet. Durch die Anordnung der Leimauftrags-Einrichtung in einem Schutz-Gehäuse sind äußere Umgebungs-Einflüsse, wie Reaktionskräfte von Dichtungen, besonders gut reduzierbar bzw. eliminierbar. Diese im Allgemeinen störenden Umgebungs-Einflüsse sind so im Wesentlichen ohne Einfluss auf die Regelung bzw. die Leimauftrags-Walze. Dies gilt insbesondere nur, wenn die Leimauftrags-Einrichtung unter Überdruck arbeitet, sodass das Schutz-Gehäuse eine Überdruckkammer bildet. Wenn die Leimauftrags-Einrichtung unter Unterdruck arbeitet, ist das Schutz-Gehäuse vorzugsweise nicht vorhanden. Die Leimauftrags-Einrichtung ist dann aber vorzugsweise ebenfalls frei von äußeren Kräften, welche bei der Regelung störend wirken.

Die Ausgestaltung gemäß dem Unteranspruch 11 erlaubt eine vollautomatische bzw. automatisierte Einstellung bzw. Verlagerung der Leimauftrags-Walze gegenüber der ersten Riffelwalze. Die Vorrichtung ist so im Hinblick auf sich ändernde Prozess-Parameter und/oder Umgebungs-Einflüsse besonders flexibel und schnell anpassbar. Ferner ist so eine äußerst hohe und gleichbleibende Qualität bei dem Leimauftrag auf die Wellbahn während der Herstellung der Wellpappebahn gewährleistbar.

Sowohl die Spalt-Regel-Einheit als auch die Anpresskraft-Regel-Einheit sind vorzugsweise während der Herstellung der mindestens einseitig kaschierten Wellpappebahn aktiv bzw. im Einsatz. Entsprechende Signale werden so erzeugt. Während der Herstellung der mindestens einseitig kaschierten Wellpappebahn ist so ein, insbesondere stufenloser, Übergang zwischen der Anpresskraft-Regelung und der Spalt-Regelung realisierbar.

Dieser Übergang erfolgt vorzugsweise in Abhängigkeit von Prozess-Parametern, wie Produktions-Geschwindigkeit der mindestens einen einseitig kaschierten Wellpappebahn, Leim-Eigenschaften des Leims und/oder Wellpappebahn-Eigenschaften, wie Riffelhöhe, Qualität derselben, oder dergleichen.

Durch Messung hydrodynamischer Kräfte zwischen der ersten Riffelwalze und der Leimauftrags-Walze über den aufgetragenen Leim durch die Anpresskraft-Regel-Einheit und Regelung/Betätigung der Spalt-Regel-Einheit über diesen Wert sind insbesondere störende Einflüsse, insbesondere Umgebungs-Einflüsse, wie eine thermische Verformung der Bauteile/Komponenten und/oder Schwingungen der Bauteile/Komponenten, und/oder eine sich ändernde Papierdicke, eliminierbar.

Wenn die Anpresskraft-Regel-Einheit aktiv ist, wird vorzugsweise die bestimmte Spalt-Weite des Spalts zwischen der ersten Riffelwalze und der Leimauftrags-Walze als Überwachungs-Referenz herangezogen. So sind die Anpresskraft-Regelung beeinträchtigende Einflüsse, wie Verschmutzung und/oder mechanische Schwergängigkeit, auswertbar bzw. kompensierbar.

Es ist gemäß Unteranspruch 14 von Vorteil, wenn die Regelung über die Spalt-Regel-Einheit oder über die Anpresskraft-Regel-Einheit in Abhängigkeit der Fluten, Riffelhöhe bzw. Wellenart der herzustellenden Wellpappebahn erfolgt. Bevorzugt erfolgt die Regelung durch die Spalt-Regel-Einheit bei herzustellenden Wellpappebahnen mit groben Fluten, wie bei A-, D- oder K-Fluten, während die Regelung über die Anpresskraft-Regel-Einheit bei Wellpappebahnen mit feinen Fluten, wie C-, B-, E- oder F-Fluten, erfolgt. Die andere Regel-Einheit ist dann inaktiv.

Nachfolgend wird unter Bezugnahme auf die beigefügte Zeichnung eine bevorzugte Ausführungsform der Erfindung beispielhaft beschrieben. Dabei zeigen:
- Fig. 1: eine perspektivische Ansicht einer Vorrichtung zur Herstellung einer einseitig kaschierten, endlosen Wellpappebahn, die das erfindungsgemäße Verfahren nutzt,

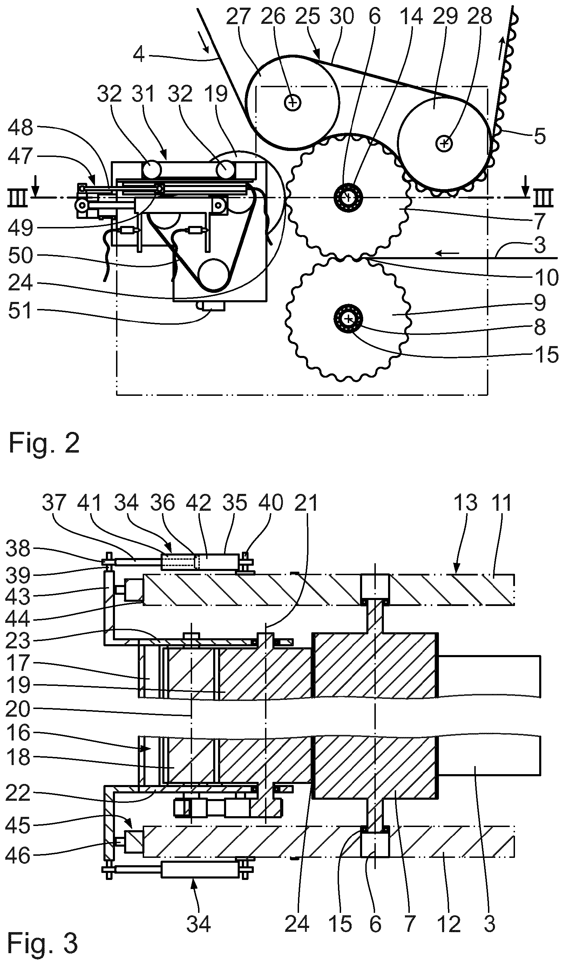

- Fig. 2: eine schematische Seitenansicht der in Fig. 1 dargestellten Vorrichtung,
- Fig. 3: einen Schnitt durch die in Fig. 2 dargestellte Vorrichtung entsprechend der Schnittlinie III-III in Fig. 2,

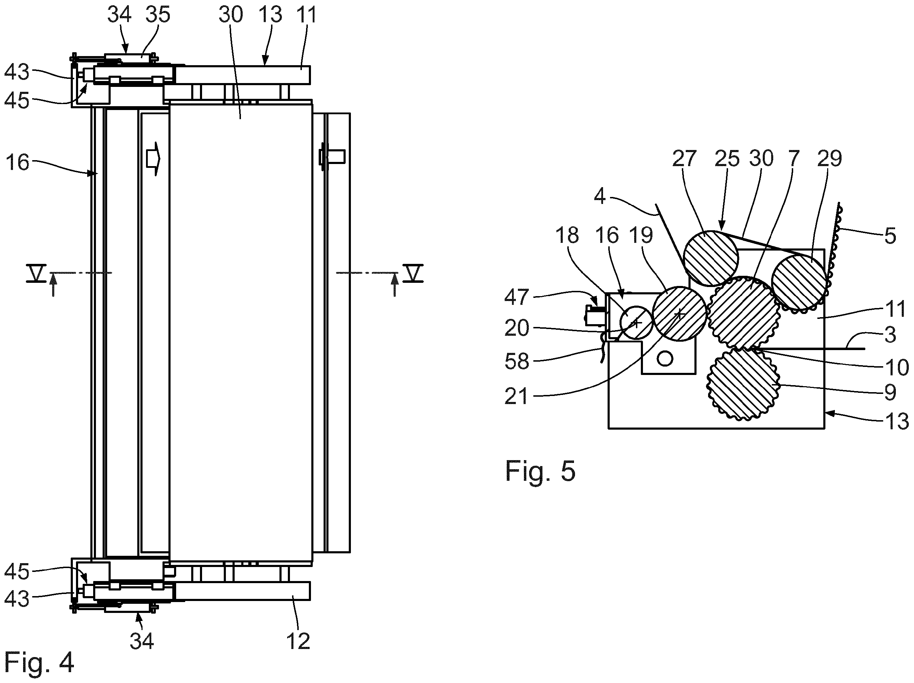

- Fig. 4: eine Draufsicht auf die in den Fig. 1 bis 3 dargestellte Vorrichtung, und
- Fig. 5: einen Schnitt durch die in Fig. 4 dargestellte Vorrichtung entsprechend der Schnittlinie V-V in Fig. 4.

Eine in ihrer Gesamtheit nicht vollständig dargestellte Wellpappe-Anlage umfasst eine Vorrichtung 1 zur Herstellung einer einseitig kaschierten, endlosen Wellpappebahn 2.

Der Vorrichtung 1 zur Herstellung der einseitig kaschierten, endlosen Wellpappebahn 2 sind eine erste Splice-Einrichtung (nicht dargestellt) und eine zweite Splice-Einrichtung (nicht dargestellt) vorgeordnet. Die erste Splice-Einrichtung umfasst zum Abrollen einer endlichen ersten Materialbahn von einer ersten Materialbahnrolle eine erste Abrolleinheit und zum Abrollen einer endlichen zweiten Materialbahn von einer zweiten Materialbahnrolle eine zweite Abrolleinheit. Die endliche erste und zweite Materialbahn werden zum Bereitstellen einer endlosen ersten Materialbahn 3 mittels einer nicht dargestellten Verbinde- und Schneideeinheit der ersten Splice-Einrichtung miteinander verbunden. Bei jedem Verbinden der endlichen ersten und zweiten Materialbahnen miteinander entsteht in der endlosen ersten Materialbahn 3 eine erste Verbindungsnaht.

Die zweite Splice-Einrichtung ist entsprechend der ersten Splice-Einrichtung ausgebildet. Diese hat zum Abrollen einer endlichen dritten Materialbahn von einer dritten Materialbahnrolle eine dritte Abrolleinheit und zum Abrollen einer endlichen vierten Materialbahn von einer vierten Materialbahnrolle eine vierte Abrolleinheit. Die endliche dritte und vierte Materialbahn werden zum Bereitstellen einer endlosen zweiten Materialbahn 4 mittels einer nicht dargestellten Verbinde- und Schneideeinheit der zweiten Splice-Einrichtung miteinander verbunden. Bei jedem Verbinden der dritten und vierten Materialbahnen miteinander entsteht in der endlosen zweiten Materialbahn 4 eine zweite Verbindungsnaht.

Die endlose erste Materialbahn 3 und die endlose zweite Materialbahn 4 werden über Umlenkrollen (nicht dargestellt) der Vorrichtung 1 zur Herstellung der einseitig kaschierten, endlosen Wellpappebahn 2 getrennt zugeführt.

Die Vorrichtung 1 zur Herstellung der einseitig kaschierten, endlosen Wellpappebahn 2 umfasst zum Erzeugen einer eine Wellung aufweisenden endlosen Wellbahn 5 aus der endlosen ersten Materialbahn 3 eine um eine erste Drehachse 6 drehbar gelagerte erste Riffelwalze 7 und eine um eine zweite Drehachse 8 drehbar gelagerte zweite Riffelwalze 9. Die Drehachsen 6, 8 verlaufen parallel zueinander und senkrecht zu einer Transportrichtung der endlosen ersten Materialbahn 3. Die Riffelwalzen 7, 9 bilden zum Durchführen und Riffeln der endlosen ersten Materialbahn 3 einen Walzen-Spalt 10 aus. Sie bilden zusammen eine Riffel-Einrichtung.

Die Riffelwalzen 7, 9 sind in Seitenteilen 11 bzw. 12 eines fixen Maschinengestells 13 der Vorrichtung 1 über Lager 14 bzw. 15 drehbar gelagert. Die Seitenteile 11, 12 verlaufen parallel und beabstandet zueinander. Sie erstrecken sich vertikal.

Zum Verbinden der Wellbahn 5 mit der endlosen zweiten Materialbahn 4 zu der einseitig kaschierten Wellpappebahn 2 weist die Vorrichtung 1 zur Herstellung der einseitig kaschierten Wellpappebahn 2 eine Leimauftrags-Einrichtung 16 stromabwärts zu den Riffelwalzen 7, 9 auf, die wiederum eine Leim-Wanne 17, eine in der Leim-Wanne 17 angeordnete Leimdosier-Walze 18 und eine in der Leim-Wanne 17 angeordnete Leimauftrags-Walze 19 umfasst. Die Leimauftrags-Walze 19 ist zwischen der Leimdosier-Walze 18 und der ersten Riffelwalze 7 angeordnet. Die Leimdosier-Walze 18 und die Leimauftrags-Walze 19 sind in Seitenwänden 22 bzw. 23 der Leim-Wanne 17 drehbar gelagert. Die Leimauftrags-Einrichtung 16 mit ihrer Leimdosier-Walze 18 und Leimauftrags-Walze 19 ist senkrecht zu der ersten Riffelwalze 7 verfahrbar.

Die Leimdosier-Walze 18 ist um eine dritte Drehachse 20 drehbar gelagert, während die Leimauftrags-Walze 19 um eine vierte Drehachse 21 drehbar gelagert ist. Die Drehachsen 20, 21 verlaufen parallel zueinander. Diese verlaufen auch parallel zu den Drehachsen 6, 8 der Riffelwalzen 7 bzw. 9.

Zum Durchführen und Beleimen der Wellbahn 5 bildet die Leimauftrags-Walze 19 mit der ersten Riffelwalze 7 einen Spalt 24 aus, der so einen Leim-Spalt bildet. Sich in der Leim-Wanne 17 befindender Leim (nicht dargestellt) wird über die in diesen eingetauchte, um die vierte Drehachse 21 rotierende Leimauftrags-Walze 19 auf freie Spitzen der Wellung der in der Transportrichtung transportierten Wellbahn 5 aufgetragen. Die Leimdosier-Walze 18 ist im Wesentlichen gegenüberliegend zu der ersten Riffelwalze 7 benachbart zu der Leimauftrags-Walze 19 angeordnet und dient zum Ausbilden einer gleichmäßigen Leimschicht auf der Leimauftrags-Walze 19. Diese rotiert dann um ihre vierte Drehachse 21.

Die Leimauftrags-Walze 19 und die Leimdosier-Walze 18 sind durch einen Antriebsriemen 50 drehantreibbar, der wiederum durch einen Antrieb 51 in Umfangsrichtung antreibbar ist. Die Walzen 18, 19 sind im Betrieb also rotierend angetrieben.

Die mit Leim versehene Wellbahn 5 wird anschließend in der Vorrichtung 1 zur Herstellung der einseitig kaschierten, endlosen Wellpappebahn 2 mit der in einer Transportrichtung transportierten, endlosen zweiten Materialbahn 4 zusammengefügt, um die endlose Wellpappebahn 2 zu erhalten. Zum Andrücken der endlosen zweiten Materialbahn 4 gegen die mit Leim versehene Wellbahn 5, die bereichsweise an der ersten Riffelwalze 7 anliegt, hat die Vorrichtung 1 zur Herstellung der einseitig kaschierten, endlosen Wellpappebahn 2 ein Andrückband-Modul 25. Das Andrückband-Modul 25 ist bezogen auf die Wellbahn 5 stromabwärts zu der Leimauftrags-Einrichtung 16 und dem Walzen-Spalt 10 angeordnet. Das Andrückband-Modul 25 ist oberhalb der ersten Riffelwalze 7 angeordnet. Es hat eine um eine fünfte Drehachse 26 drehbar gelagerte Umlenk-Walze 27 und eine um eine sechste Drehachse 28 drehbar gelagerte Umlenk-Walze 29 sowie ein endloses Andrück-Band 30, das um die Umlenk-Walzen 27, 29 in einer Umfangsrichtung herumgeführt ist. Die Drechachsen 26, 28 verlaufen parallel zueinander. Sie verlaufen auch parallel zu den Drehachsen 6, 8.

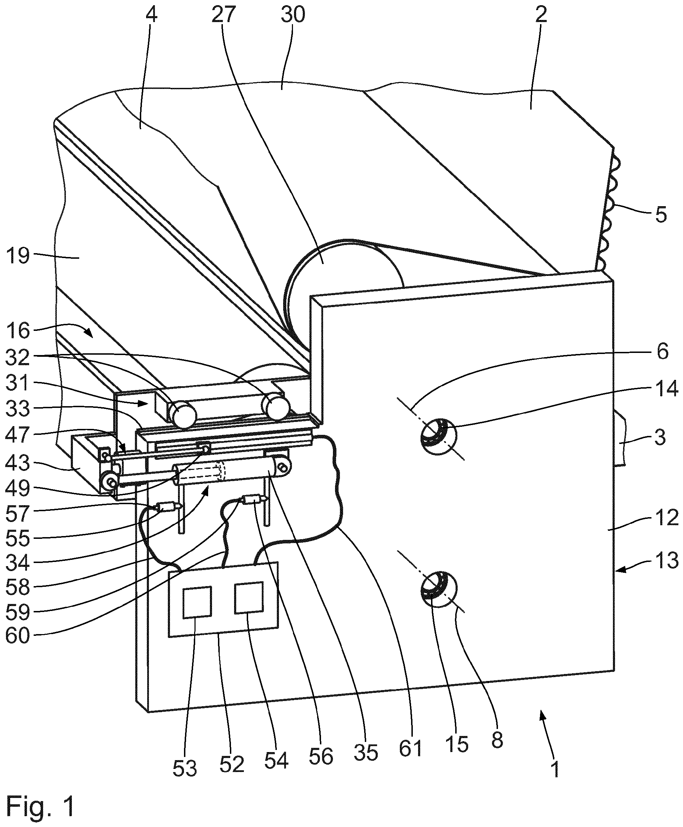

Die erste Riffelwalze 7 greift in einen zwischen den Umlenk-Walzen 27, 29 vorliegenden Raum bereichsweise ein. Das Andrück-Band 30 wird dabei durch die erste Riffelwalze 7 umgelenkt. Es drückt gegen die endlose zweite Materialbahn 4, die so wiederum gegen die mit Leim versehene, an der ersten Riffelwalze 7 anliegende Wellbahn 5 gedrückt wird. Die Wellpappebahn 2 hat eine bestimmte Riffelhöhe bzw. bestimmte Fluten (siehe Fig. 1).

Die Anlage zur Herstellung einer Wellpappebahn kann eine weitere Vorrichtung 1 zur Herstellung einer einseitig kaschierten, endlosen Wellpappebahn 2 umfassen, die dann mit der anderen Wellpappebahn 2 verleimt wird.

Die Längsränder der Wellpappebahn 2 können dann mittels einer Längsschneide-Einrichtung abgetrennt werden. Es ist möglich, dass die Wellpappebahn 2 senkrecht zu ihrer Transportrichtung mittels einer Querschneide-Einrichtung in einzelne Wellpappebögen geschnitten wird.

Nachfolgend wird eine bevorzugte Ausführung der Leimauftrags-Einrichtung 16 und deren Verstellung bzw. Verlagerung detaillierter beschrieben. Wie bereits erwähnt, ist die Leimauftrags-Einrichtung 16 gegenüber der ersten Riffelwalze 7 verstellbar bzw. verfahrbar. Dafür ist an jeder Seitenwand 22, 23 der Leimauftrags-Einrichtung 16 eine Laufrollen-Einheit 31 angeordnet, die einander gegenüberliegen und Laufrollen 32 haben. Die Laufrollen 32 einer Laufrollen-Einheit 31 sind seitlich versetzt zueinander in einer horizontalen Ebene angeordnet. Diese stützen sich jeweils gegenüber einer Laufbahn 33 ab, die horizontal verläuft und an dem Maschinengestell 13 ausgebildet bzw. angeordnet ist. Die Laufbahnen 33 erstrecken sich senkrecht zu der ersten Drehachse 6 und horizontal.

Ferner sind zwei Kolben-Zylinder-Einheiten 34 vorhanden, die jeweils zwischen dem Maschinengestell 13 und der Leimauftrags-Einrichtung 16 wirken. Die Kolben-Zylinder-Einheiten 34 sind einander gegenüberliegend seitlich außen angeordnet und identisch ausgeführt. Sie erstrecken sich im Wesentlichen horizontal. Jede Kolben-Zylinder-Einheit 34 umfasst ein zylinderartiges Gehäuse 35, in dem ein Kolben 36 abgedichtet gegenüber dem Gehäuse 35 axial verschiebbar geführt ist. An den Kolben 36 schließt sich jeweils eine Kolbenstange 37 an, die aus dem Gehäuse 35 herausgeführt ist. An einem freien äußeren Ende 38 der Kolbenstange 37 ist ein erstes Befestigungsmittel 39 angeordnet, während an dem Gehäuse 35, gegenüberliegend zu dem von der Kolbenstange 37 durchsetzten Ende des Gehäuses 35 ein zweites Befestigungsmittel 40 vorgesehen ist. Jede Kolben-Zylinder-Einheit 34 ist über ihr zweites Befestigungsmittel 40 an dem jeweiligen Seitenteil 11, 12 des Maschinengestells 13 befestigt. Ferner ist jede Kolben-Zylinder-Einheit 34 über ihr erstes Befestigungsmittel 39 an der Leimauftrags-Einrichtung 16 befestigt. Eine umgekehrte Anordnung ist alternativ möglich.

Durch das Gehäuse 35 ist ein mit Fluid gefüllter Arbeitsraum in jeder Kolben-Zylinder-Einheit 34 räumlich begrenzt. Die Kolben 36 teilen den Arbeitsraum jeweils in einen ersten Teil-Arbeitsraum 41 und einen zweiten Teil-Arbeitsraum 42. Sie sind gegenüber dem Gehäuse 35 jeweils beweglich.

Die ersten Befestigungsmittel 39 sind an Übertragungs-Vorsprüngen 43 örtlich festgelegt, die fest mit den Seitenwänden 22 bzw. 23 verbunden sind und von diesen beispielsweise jeweils nach seitlich außen vorspringen.

Die Seitenteile 11 bzw. 12 haben außerdem jeweils eine den Übertragungs-Vorsprüngen 43 zugewandte Seitenfläche 44, wobei zwischen jeder Seitenfläche 44 und dem benachbart angeordneten Übertragungs-Vorsprung 43 eine Verspann-Kolben-Zylinder-Einheit 45 vorgesehen ist.

Jede Verspann-Kolben-Zylinder-Einheit 45 hat einen ein- bzw. ausfahrbaren Verspann-Körper 46, der sich innenseitig an dem jeweiligen Übertragungs-Vorsprung 43 abstützt. Das Gehäuse der jeweiligen Verspann-Kolben-Zylinder-Einheit 45 ist dagegen an dem Maschinengestell 13 festgelegt. Eine umgekehrte Anordnung ist alternativ möglich.

Die Verspann-Kolben-Zylinder-Einheiten 45 und die Kolben-Zylinder-Einheiten 34 haben Kraft-Wirkungslinien, die parallel zueinander verlaufen und sich vorzugsweise horizontal erstrecken.

Ferner sind zwischen dem Maschinengestell 13 und der Leimauftrags-Einrichtung 16 zwei seitlich äußere Weg-Mess-Systeme 47 angeordnet. Jedes Weg-Mess-System 47 arbeitet magnetostriktiv und umfasst eine an dem Übertragungs-Vorsprung 43 örtlich festgelegte Messstange 48, die an einem an dem Maschinengestell 13 fixierten Permanentmagnet 49 vorbeiläuft bzw. diesen durchsetzt. Eine umgekehrte Anordnung ist alternativ möglich. Die Messstangen 48 erstrecken sich horizontal und parallel zueinander. Bei einer Verlagerung der Leimauftrags-Einrichtung 16 gegenüber der ersten Riffelwalze 7 erfolgt eine Relativbewegung zwischen den Messstangen 48 und den zugehörigen Permanentmagneten 49, die bei einer Weg-Messung detektiert wird.

Die Vorrichtung 1 zur Herstellung der einseitig kaschierten, endlosen Wellpappebahn 2 hat außerdem eine Regelungs-Einrichtung 52 mit einer Spalt-Regel-Einheit 53 und einer Anpresskraft-Regel-Einheit 54.

Mit dem ersten Teil-Arbeitsraum 41 ist eine erste Druckaufnahme-Einheit 55 in Druck-übertragender Weise verbunden, während mit dem zweiten Teil-Arbeitsraum 42 in Druck-übertragender Weise eine zweite Druckaufnahme-Einheit 56 verbunden ist. Die erste Druckaufnahme-Einheit 55 hat einen ersten Ausgang 57, der über eine erste Verbindungsleitung 58 mit der Regelungs-Einrichtung 52 in elektrischer Signal-Verbindung steht. Die zweite Druckaufnahme-Einheit 56 hat einen zweiten Ausgang 59, der über eine zweite Verbindungsleitung 60 mit der Regelungs-Einrichtung 52 in elektrischer Signal-Verbindung steht. Ferner ist jedes Weg-Mess-System 47 über eine jeweilige Verbindungsleitung 61 elektrisch mit der Regelungs-Einrichtung 52 verbunden.

Die Regelungs-Einrichtung 52 empfängt im Betrieb von der ersten Druckaufnahme-Einheit 55 erste Druck-Signale, die jeweils repräsentativ für den herrschenden Druck in dem ersten Teil-Arbeitsraum 41 sind. Die Regelungs-Einrichtung 52 empfängt von der zweiten Druckaufnahme-Einheit 56 zweite Druck-Signale, die jeweils repräsentativ für den herrschenden Druck in dem zweiten Teil-Arbeitsraum 42 sind. Die Regelungs-Einrichtung 52 empfängt von den Weg-Mess-Systemen 47 Weg-Mess-Signale, die jeweils repräsentativ für die Spalt-Weite zwischen der ersten Riffel-Walze 7 und der Leimauftrags-Walze 19 sind. Anhand der Signale erfolgt nach Verarbeitung derselben die Regelung in der Regelungs-Einrichtung 52.

Durch Ein- bzw. Ausfahren der Kolbenstangen 37 ist die Leimauftrags-Einrichtung 16 entsprechend der Regelung durch die Regelungs-Einrichtung 52 gegenüber dem Maschinengestell 13 bzw. der ersten Riffelwalze 7 verfahrbar. Beim Verfahren der Leimauftrags-Einrichtung 16 laufen die Laufrollen-Einheiten 31 entsprechend auf den Laufbahnen 33.

Bei der Spalt-Regelung durch die Spalt-Regel-Einheit 53 wird die Leimauftrags-Einrichtung 16 mittels der Verspann-Kolben-Zylinder-Einheiten 45 gegenüber dem Maschinengestell 13 durch Ausfahren der Verspann-Körper 46 verspannt. Der Kontakt zwischen der Leimauftrags-Walze 19 und der ersten Riffelwalze 7 wird dabei von der Regelungs-Einrichtung 52 durch einen Druck-Anstieg in dem ersten und/oder zweiten TeilAufnahmeraum 41 bzw. 42 detektiert. Dieser Druck-Anstieg dient quasi als Nullpunkt für die Spalt-Regelung durch die Spalt-Regel-Einheit 53. Nachdem dieser Nullpunkt von der Regelungs-Einrichtung 52 registriert worden ist, wird die Leimauftrags-Einrichtung 16 mittels der Kolben-Zylinder-Einheiten 34 auf den gewünschten Abstand zu der ersten Riffelwalze 7 verfahren.

Im Betrieb der Vorrichtung 1 zur Herstellung der einseitig kaschierten Wellpappebahn 2 mit einem voreingestellten Spalt 24 zwischen der ersten Riffelwalze 7 und der Leimauftrags-Walze 19 ist eine Restkraft über die Druckaufnahme-Einheiten 55, 56 messbar. Diese Restkraft kommt zustande durch das Eintauchen der Wellenspitzen der Wellbahn 5 in die Leimschicht bzw. den Leimfilm auf der Leimauftrags-Walze 19 bzw. durch das Abfedern der Wellbahn 5 an der Leimauftrags-Walze 19. Die Schwankungen dieser detektierten Restkraft werden in der Regelungs-Einrichtung 52 zur Einhaltung des Spalts 24 zwischen der ersten Riffelwalze 7 und der Leimauftrags-Walze 19 ausgewertet und fließen in die Regelung ein.

Bei der Anpresskraft-Regelung durch die Anpresskraft-Regel-Einheit 54 werden die Verspann-Kolben-Zylinder-Einheiten 45 deaktiviert, so dass diese funktionslos sind. Der Kontakt zwischen der Leimauftrags-Walze 19 und der ersten Riffelwalze 7 wird hier wieder über einen Druck-Anstieg in dem ersten und/oder zweiten Teil-Arbeitsraum 41 bzw. 42 von der Regelungs-Einrichtung 52 detektiert und dient als Nullpunkt. Von diesem Nullpunkt aus wird die Anpresskraft der Leimauftrags-Walze 19 gegen die erste Riffelwalze 7 geregelt. Hierdurch sind Beschädigungen an der Leimauftrags-Walze 19 beim Anfahren an die erste Riffelwalze 7 weitgehend verhinderbar.

Im Betrieb der Vorrichtung 1 zur Herstellung der einseitig kaschierten, endlosen Wellpappebahn 2 erfolgt laufend eine automatisierte Spalt-Regelung durch die Spalt-Regel-Einheit 53 und Anpresskraft-Regelung durch die Anpresskraft-Regel-Einheit 54.

Im Betrieb der Vorrichtung 1 zur Herstellung der einseitig kaschierten, endlosen Wellpappebahn 2 kommt entweder die Spalt-Regelung durch die Spalt-Regel-Einheit 53 oder die Anpresskraft-Regelung durch die Anpresskraft-Regel-Einheit 54 zum Einsatz.

Grundsätzlich ist es möglich, bei allen Fluten bzw. Riffelhöhen der zu produzierenden Wellpappebahn 2 mit der Anpresskraft-Regelung durch die Anpresskraft-Regel-Einheit 54 zu arbeiten. Bei Wellpappebahnen 2 mit besonders groben Wellen ist dies jedoch von Nachteil, da die Leimauftrags-Einrichtung 16 bzw. die Leimauftrags-Walze 19 dann durch die groben Wellen der ersten Riffelwalze 7 starken Vibrationen ausgesetzt ist, was zu einer erheblichen Verkürzung der Lebensdauer der Leimauftrags-Walze 19 führen kann.

Es ist somit von Vorteil, Wellpappebahnen 2 mit feinen Fluten bzw. Wellen mit einer Anpresskraft-Regelung durch die Anpresskraft-Regel-Einheit 54 zu produzieren. Dabei kommt es im Allgemeinen auf besonders dünne und präzise Leimschichten bzw. Leimfilme an. Diese sehr dünnen bzw. präzisen Leimfilme sind mit einer Spalt-Regelung durch die Spalt-Regel-Einheit 53 nur unter erschwerten Bedingungen erreichbar. Diese feinen Fluten erzeugen nur sehr geringe Vibrationen in der Leimauftrags-Einrichtung 16 bzw. der Leimauftrags-Walze. Typische feine Fluten sind beispielsweise C-, B-, E- und F-Fluten.

Für grobe Fluten bzw. Wellen, welche im Allgemeinen mit dickeren Leimschichten erzeugt werden, ist dagegen die Spalt-Regelung durch die Spalt-Regel-Einheit 53 von Vorteil. Beispiele für derartige grobe Fluten sind A-, D- oder K-Fluten. Das Übertragen der Vibrationen auf die Leimauftrags-Einrichtung 16 bzw. die Leimauftrags-Walze 19 bleibt damit aus.

Die erfindungsgemäße Vorrichtung zur Herstellung einer mindestens einseitig kaschierten endlosen Wellpappebahn 2 ist so vorzugsweise in Abhängigkeit der Fluten bzw. Wellenart der zu erzeugenden Wellpappebahn 2 geregelt.

## Patentansprüche

1. Verfahren zur Herstellung einer mindestens einseitig kaschierten, endlosen Wellpappebahn (2), umfassend die Schritte
- Erzeugen einer eine Wellung aufweisenden Wellbahn (5) mittels einer ersten Riffelwalze (7) und einer zweiten Riffelwalze (9),
- Auftragen von Leim auf Spitzen der Wellung der Wellbahn (5) mittels einer Leimauftrags-Walze (19) einer Leimauftrags-Einrichtung (16), wobei die Leimauftrags-Walze (19)
-- der ersten Riffelwalze (7) unter Bildung eines Spalts (24) zugeordnet ist, und
-- gegenüber der ersten Riffelwalze (7) zum Beeinflussen der Leimauftrags-Menge auf die Spitzen der Wellung der Wellbahn (5) verlagerbar ist,
- Bereitstellen einer Verlagerungs-Einrichtung (34) zum Verlagern der Leimauftrags-Walze (19) gegenüber der ersten Riffelwalze (7),
- Andrücken einer Kaschierbahn (4) an die mit Leim versehenen Spitzen der an der ersten Riffelwalze (7) über einen Andrückbereich anliegenden Wellbahn (5) mittels einer Andrück-Einrichtung (25), und
- Durchführen einer Regelung mittels einer Regelungs-Einrichtung (52), die
-- mit der Verlagerungs-Einrichtung (34) zum Betätigen derselben in Signal-Verbindung steht,
-- eine Spalt-Regel-Einheit (53) zum Regeln einer Spalt-Weite des Spalts (24) zwischen der ersten Riffelwalze (7) und der Leimauftrags-Walze (19) umfasst, und
-- eine Anpresskraft-Regel-Einheit (54) zum Regeln einer Anpresskraft der Leimauftrags-Walze (19) gegen die erste Riffelwalze (7) umfasst,
**dadurch gekennzeichnet, dass**
-- die Spalt-Regelung durch die Spalt-Regel-Einheit (53) oder die Anpresskraft-Regelung durch die Anpresskraft-Regel-Einheit (54) in Abhängigkeit von Prozess-Parametern, Leim-Eigenschaften und/oder Wellpappebahn-Eigenschaften zum Einsatz kommt.

2. Verfahren nach Anspruch 1, **dadurch gekennzeichnet, dass** die Verlagerungs-Einrichtung (34) mindestens eine in ihrer Länge veränderbare Kolben-Zylinder-Einheit (34) zum Verlagern der Leimauftrags-Walze (19) gegenüber der ersten Riffelwalze (7) umfasst.

3. Verfahren nach Anspruch 2, **dadurch gekennzeichnet, dass** die mindestens eine Kolben-Zylinder-Einheit (34) einen ersten Teil-Arbeitsraum (41), einen zweiten Teil-Arbeitsraum (42) und einen den ersten und den zweiten Teil-Arbeitsraum (41, 42) voneinander trennenden, verschiebbaren Kolben (36) sowie eine an den Kolben (36) angeschlossene Kolbenstange (37) umfasst.

4. Verfahren nach Anspruch 3, **dadurch gekennzeichnet, dass** eine erste Druckmess-Einheit (55) den Druck in dem ersten Teil-Arbeitsraum (41) misst und die Regelungs-Einrichtung (52) erste Druck-Signale empfängt, die repräsentativ für den gemessenen Druck in dem ersten Teil-Arbeitsraum (41) sind.

5. Verfahren nach Anspruch 3 oder 4, **dadurch gekennzeichnet, dass** eine zweite Druckmess-Einheit (56) den Druck in dem zweiten Teil-Arbeitsraum (42) misst und die Regelungs-Einrichtung (52) zweite Druck-Signale empfängt, die repräsentativ für den gemessenen Druck in dem zweiten Teil-Arbeitsraum (42) sind.

6. Verfahren nach einem der Ansprüche 3 bis 5, **dadurch gekennzeichnet, dass** die Regelungs-Einrichtung (52) einen Spalt-Weiten-Nullpunkt des Spalts (24) zwischen der Leimauftrags-Walze (19) und der ersten Riffelwalze (7) durch eine Druck-Veränderung in dem ersten und/oder zweien Teil-Arbeitsraum (41, 42) detektiert.

7. Verfahren nach Anspruch 6, **dadurch gekennzeichnet, dass** die Verlagerungs-Einrichtung (34) die Leimauftrags-Walze (18) nach Registrierung des Spalt-Weiten-Nullpunkts entsprechend einer einzustellenden Spalt-Weite des Spalts (24) zwischen der Leimauftrags-Walze (19) und der ersten Riffelwalze (7) verlagert.

8. Verfahren nach einem der vorherigen Ansprüche, **gekennzeichnet durch** mindestens ein mit der Regelungs-Einrichtung (52) in Signal-Verbindung stehendes Weg-Mess-System (47) zur streckenmäßigen Bestimmung der Spalt-Weite des Spalts (24) zwischen der ersten Riffelwalze (7) und der Leimauftrags-Walze (19).

9. Verfahren nach einem der vorherigen Ansprüche, **dadurch gekennzeichnet, dass** beim Regeln der Spalt-Weite des Spalts (24) zwischen der Leimauftrags-Walze (19) und der ersten Riffelwalze (7) die Leimauftrags-Einrichtung (16) gegenüber einem Maschinengestell (13) der Vorrichtung (1) durch mindestens eine Verspann-Einheit (45) verspannt ist, die vorzugsweise durch eine Verspann-Kolben-Zylinder-Einheit (45) gebildet ist.

10. Verfahren nach einem der vorherigen Ansprüche, **dadurch gekennzeichnet, dass** die Regelungs-Einrichtung (52) einen Anpresskraft-Nullpunkt der Anpresskraft der Leimauftrags-Walze (19) gegen die erste Riffelwalze (7) durch eine Druck-Veränderung detektiert.

11. Verfahren nach einem der vorherigen Ansprüche, **dadurch gekennzeichnet, dass** die Spalt-Regel-Einheit (53) und/oder die Anpresskraft-Regel-Einheit (54) während der Herstellung der mindestens einseitig kaschierten Wellpappebahn (2) automatisiert Regel-Vorgänge durchführt.

12. Verfahren nach einem der vorherigen Ansprüche, **dadurch gekennzeichnet, dass** laufend eine automatisierte Spalt-Regelung durch die Spalt-Regel-Einheit (53) und Anpresskraft-Regelung durch die Anpresskraft-Regel-Einheit (54) während der Herstellung der mindestens einseitig kaschierten Wellpappe-Bahn (2) erfolgt.

13. Verfahren nach einem der vorherigen Ansprüche, **dadurch gekennzeichnet, dass** während der Anpresskraft-Regelung durch die Anpresskraft-Regel-Einheit (54) eine durch die Spalt-Regel-Einheit (53) bestimmte Spalt-Weite des Spalts (24) als Überwachungs-Referenz dient.

14. Verfahren nach einem der vorherigen Ansprüche, **dadurch gekennzeichnet, dass** die Spalt-Regel-Einheit (53) oder die Anpresskraft-Regel-Einheit (54) in Abhängigkeit der Fluten der herzustellenden Wellpappebahn (2) aktiv ist, wobei vorzugsweise bei der Herstellung von Wellpappebahnen (2) mit groben Fluten die Spalt-Regel-Einheit (53) aktiv ist und bei der Herstellung von Wellpappebahnen (2) mit feinen Fluten die Anpresskraft-Regel-Einheit (54) aktiv ist.

## Claims

1. Method of producing an endless web (2) of corrugated cardboard which is laminated on at least one side, the method comprising the following steps:
- producing a corrugated web (5) having a corrugation by means of a first corrugating roller (7) and a second corrugating roller (9);
- applying glue to tips of the corrugation of the corrugated web (5) by means of a glue application roller (19) of a glue application device (16), wherein the glue application roller (19)
-- is associated to the first corrugating roller (7) in such a way as to form a gap (24); and
-- is displaceable relative to the first corrugating roller (7) in order to influence the glue application quantity to be applied to the tips of the corrugation of the corrugated web (5);
- providing a displacement device (34) in order to displace the glue application roller (19) relative to the first corrugating roller (7);
- pressing a laminating web (4) against the tips provided with glue of the corrugated web (5) by means of a pressing device (25), wherein the corrugated web (5) abuts against the first corrugating roller (7) in a pressing region; and
- performing an regulating using a regulating device (52) which
-- is in signal connection with the displacement device (34) for actuation thereof;
-- comprises a gap regulating unit (53) in order to adjust a gap width of the gap (24) between the first corrugating roller (7) and the glue application roller (19); and
-- comprises a contact force regulating unit (54) in order to adjust a contact force applied to the first corrugating roller (7) by the glue application roller (19),
**characterized in that**
-- the gap regulation by the gap regulating unit (53) or the contact force regulation by the contact force regulating unit (54) are used depending on process parameters, glue properties and/or properties of the web of corrugated cardboard.

2. Method according to claim 1, **characterized in that** the displacement device (34) comprises at least one length-adjustable piston cylinder unit (34) for displacing the glue application roller (19) relative to the first corrugating roller (7).

3. Method according to claim 2, **characterized in that** the at least one piston cylinder unit (34) comprises a first partial work zone (41), a second partial work zone (42), and a displaceable piston (36) which separates the first and second partial work zones (41, 42) from each other as well as a piston rod (37) which is connected to the piston (36).

4. Method according to claim 3, **characterized in that** a first pressure measuring unit (55) measures the pressure in the first partial work zone (41), and the regulating device (52) receives first pressure signals which are representative of the pressure measured in the first partial work zone (41).

5. Method according to claim 3 or 4, **characterized in that** a second pressure measuring unit (56) measures the pressure in the second partial work zone (42), and the regulating device (52) receives second pressure signals which are representative of the pressure measured in the second partial work zone (42).

6. Method according to one of claims 3 to 5, **characterized in that** the regulating device (52) detects a gap width zero point of the gap (24) between the glue application roller (19) and the first corrugating roller (7) as a result of a pressure change in the first and/or second partial work zone (41, 42).

7. Method according to claim 6, **characterized in that** after registering the gap width zero point, the displacement device (34) displaces the glue application roller (19) such as to correspond to a gap width of the gap (24) to be adjusted between the glue application roller (19) and the first corrugating roller (7).

8. Method according to one of the preceding claims, **characterized by** at least one distance measuring system (47) which is in signal connection with the regulating device (52) in order to dimensionally determine the gap width of the gap (24) between the first corrugating roller (7) and the glue application roller (19).

9. Method according to one of the preceding claims, **characterized in that** when regulating the gap width of the gap (24) between the glue application roller (19) and the first corrugating roller (7), the glue application device (16) is clamped relative to a machine frame (13) of the device (1) by means of at least one clamping unit (45) which is preferably formed by a clamping piston cylinder unit (45).

10. Method according to one of the preceding claims, **characterized in that** the regulating device (52) detects a contact force zero point of the contact force applied to the first corrugating roller (7) by the glue application roller (19) as a result of a pressure change.

11. Method according to one of the preceding claims, **characterized in that** the gap regulating unit (53) and/or the contact force regulating unit (54) performs regulating processes in an automated manner during production of the web (2) of corrugated cardboard which is laminated on at least one side.

12. Method according to one of the preceding claims **characterized in that** an automated gap regulation by the gap regulating unit (53) and a contact force regulation by the contact force regulating unit (54) take place continuously during the production of the web (2) of corrugated cardboard laminated on at least one side.

13. Method according to one of the preceding claims **characterized in that** during the contact force regulation by the contact force regulating unit (54), a gap width of the gap (24) determined by the gap regulating unit (53) is used as the monitoring reference.

14. Method according to one of the preceding claims, **characterized in that** depending on the flutes of the web (2) of corrugated cardboard to be produced, either the gap regulating unit (53) or the contact force regulating unit (54) is active, wherein the gap regulating unit (53) is preferably active when producing webs (2) of corrugated cardboard having large-size flutes while the contact force regulating unit (54) is preferably active when producing webs (2) of corrugated cardboard having fine flutes.

## Revendications

1. Procédé de fabrication d'une bande de carton ondulé (2) sans fin contrecollée au moins sur une face, comprenant les étapes :
- de production d'une bande ondulée (5), présentant une ondulation, au moyen d'un premier cylindre cannelé (7) et d'un deuxième cylindre cannelé (9),
- d'application de colle sur des pointes de l'ondulation de la bande ondulée (5) au moyen d'un cylindre d'application de colle (19) d'un dispositif d'application de colle (16), le cylindre d'application de colle (19)
-- étant associé au premier cylindre cannelé (7) avec formation d'un interstice (24), et
-- pouvant être déplacé par rapport au premier cylindre cannelé (7) afin d'influer sur la quantité d'application de colle sur les pointes de l'ondulation de la bande ondulée (5),
- de fourniture d'un dispositif de déplacement (34) destiné à déplacer le cylindre d'application de colle (19) par rapport au premier cylindre cannelé (7),
- de pressage, au moyen d'un dispositif presseur (25), d'une bande de contre-collage (4) sur les pointes, munies de colle, de la bande ondulée (5) appliquée sur le premier cylindre cannelé (7) sur une zone de pressage, et
- de réalisation d'une régulation au moyen d'un dispositif de régulation (52) qui
-- est en liaison de signal avec le dispositif de déplacement (34) pour actionner celui-ci,
-- comprend une unité de réglage d'interstice (53) destinée à régler la largeur de l'interstice (24) entre le premier cylindre cannelé (7) et le cylindre d'application de colle (19), et
-- comprend une unité de réglage de force de pressage (54) destinée à régler la force de pressage du cylindre d'application de colle (19) contre le premier cylindre cannelé (7), **caractérisé en ce que**
-- le réglage de l'interstice par l'unité de réglage d'interstice (53) ou le réglage de la force de pressage par l'unité de réglage de force de pressage (54) est effectué en fonction de paramètres de processus, de caractéristiques de la colle et/ou de caractéristiques de la bande de carton ondulé.

2. Procédé selon la revendication 1, **caractérisé en ce que** le dispositif de déplacement (34) comprend au moins une unité piston-cylindre (34) de longueur variable destinée à déplacer le cylindre d'application de colle (19) par rapport au premier cylindre cannelé (7).

3. Procédé selon la revendication 2, **caractérisé en ce que** l'au moins une unité piston-cylindre (34) comprend une première partie d'espace de travail (41), une deuxième partie d'espace de travail (42) et un piston (36) coulissant séparant l'une de l'autre les première et deuxième parties d'espace de travail (41, 42), ainsi qu'une tige de piston (37) raccordée au piston (36).

4. Procédé selon la revendication 3, **caractérisé en ce qu'**une première unité de mesure de pression (55) mesure la pression dans la première partie d'espace de travail (41), et le dispositif de réglage (52) reçoit des premiers signaux de pression qui sont représentatifs de la pression mesurée dans la première partie d'espace de travail (41).

5. Procédé selon la revendication 3 ou 4, **caractérisé en ce qu'**une deuxième unité de mesure de pression (56) mesure la pression dans la deuxième partie d'espace de travail (42), et le dispositif de réglage (52) reçoit des deuxièmes signaux de pression qui sont représentatifs de la pression mesurée dans la deuxième partie d'espace de travail (42).

6. Procédé selon l'une des revendications 3 à 5, **caractérisé en ce que** le dispositif de réglage (52) détecte un point zéro de largeur d'interstice de l'interstice (24) entre le cylindre d'application de colle (19) et le premier cylindre cannelé (7) par une variation de pression dans la première et/ou deuxième partie d'espace de travail (41, 42).

7. Procédé selon la revendication 6, **caractérisé en ce que** le dispositif de déplacement (34) déplace le cylindre d'application de colle (18) après l'enregistrement du point zéro de largeur d'interstice en fonction d'une largeur d'interstice à régler de l'interstice (24) entre le cylindre d'application de colle (19) et le premier cylindre cannelé (7).

8. Procédé selon l'une des revendications précédentes, **caractérisé par** au moins un système de mesure de course (47), qui est en liaison de signal avec le dispositif de réglage (52), et qui est destiné à déterminer, selon le trajet, la largeur de l'interstice (24) entre le premier cylindre cannelé (7) et le cylindre d'application de colle (19).

9. Procédé selon l'une des revendications précédentes, **caractérisé en ce que**, lors du réglage de la largeur de l'interstice (24) entre le cylindre d'application de colle (19) et le premier cylindre cannelé (7), le dispositif d'application de colle (16) est serré par rapport à un bâti de machine (13) du dispositif (1) par au moins une unité de serrage (45) qui est de préférence formée par une unité piston-cylindre de serrage (45).

10. Procédé selon l'une des revendications précédentes, **caractérisé en ce que** le dispositif de réglage (52) détecte, par une variation de pression, un point zéro de la force de pressage du cylindre d'application de colle (19) contre le premier cylindre cannelé (7).

11. Procédé selon l'une des revendications précédentes, **caractérisé en ce que** l'unité de réglage d'interstice (53) et/ou l'unité de réglage de force pressage (54) effectue des processus de réglage de façon automatisée pendant la fabrication de la bande de carton ondulé (2) contrecollée au moins sur une face.

12. Procédé selon l'une des revendications précédentes, **caractérisé en ce qu'**e le réglage d'interstice automatisé est effectué en permanence par l'unité de réglage d'interstice (53), et le réglage de la force de pressage est effectuée en permanence par l'unité de réglage de force de pressage (54) pendant la fabrication de la bande de carton ondulé (2) contrecollée au moins sur une face.

13. Procédé selon l'une des revendications précédentes, **caractérisé en ce que**, pendant la régulation de la force de pressage par l'unité de réglage de force de pressage (54), la largeur de l'interstice (24) définie par l'unité de réglage d'interstice (53) sert de référence de surveillance.

14. Procédé selon l'une des revendications précédentes, **caractérisé en ce que** l'unité de réglage d'interstice (53) ou l'unité de réglage de force de pressage (54) est active en fonction des flux alimentant la bande de carton ondulé (2) à fabriquer, l'unité de réglage d'interstice (53) étant de préférence active lors de la fabrication de bandes de carton ondulé (2) avec des flux grossiers, et l'unité de réglage de force de pressage (54) étant de préférence active lors de la fabrication de bandes de carton ondulé (2) avec des flux fins.
